# EUROPEAN PATENT SPECIFICATION

(11) **EP 3 710 358 B1**
(45) Date of publication and mention of the grant of the patent: **02.04.2025**
(21) Application number: 17932176.5
(22) Date of filing: 15.11.2017
(51) Int. Cl.: B64C 39/02, B64C 27/02, B60S 3/04

(54) **UNMANNED AERIAL VEHICLE, METHOD AND SYSTEM FOR PROVIDING CLEANING SERVICE FOR VEHICLE**
UNBEMANNTES LUFTFAHRZEUG, VERFAHREN UND SYSTEM ZUR BEREITSTELLUNG EINES REINIGUNGSDIENSTES FÜR EIN FAHRZEUG
VÉHICULE AÉRIEN SANS ÉQUIPAGE, PROCÉDÉ ET SYSTÈME POUR ASSURER UN SERVICE DE NETTOYAGE D'UN VÉHICULE

(43) Date of publication of application: 23.09.2020
(73) Proprietor: Bayerische Motoren Werke Aktiengesellschaft, 80809 München (DE)
(72) Inventor: KARABURUN, Sinan, Beijing 100027 (CN)
(86) International application number: PCT/CN2017/111077
(87) International publication number: WO 2019/095135

(56) References cited:
- WO-A1-2016/028736
- WO-A1-2016/080598
- CN-A- 106 527 424
- DE-A1- 102014 009 903
- US-A1- 2013 233 964
- US-A1- 2015 344 136
- US-A1- 2017 121 019
- US-A1- 2017 129 099
- US-A1- 2017 129 602
- US-A1- 2017 158 329
- US-A1- 2017 158 329

## Description

### FIELD OF THE INVENTION

The present disclosure relates in general to a field of providing a cleaning service for a vehicle, and in more particular, to an unmanned aerial vehicle, as well as a method, a system, and a non-transitory computer readable medium for providing a cleaning service for a vehicle.

### BACKGROUND OF THE INVENTION

In current market there are several vehicle cleaning service providers aiming to provide convenient and personalized vehicle cleaning reservation services via mobile apps. Several service providers even have introduced the delivery vehicle cleaning services, saving a vehicle owner from an effort of driving the vehicle to a vehicle cleaning station. The service gained some popularity among a few target customers.

The document US 2017/0129099 A1 discloses a method implemented by at least one unmanned aerial vehicle for providing a cleaning service of a vehicle. The document US 2017/0158329 A1 discloses a method implemented by at least one unmanned aerial vehicle for providing a cleaning service of a wall body. Further, document DE 10 2014 009903 A1 discloses a method for controlling a flying body for cleaning surfaces of objects, as for example solar panels, wherein the system comprises a sensor system for detecting geometric properties and orientation of the object to be cleaned.
At least, document US 2017/121019 A1 discusses a drone-type car wash robot that may detect dirty state information and shape information of a vehicle while flying around the same.

### SUMMARY OF THE INVENTION

An aspect of the present disclosure aims to provide an unmanned aerial vehicle, as well as a method, a system, and a non-transitory computer readable medium for providing a cleaning service for a vehicle.

In accordance with a first exemplary embodiment of the present disclosure, a method implemented by at least one unmanned aerial vehicle for providing a cleaning service for a vehicle is provided, comprising: cleaning the vehicle, wherein the cleaning comprises a washing process comprising: flying according to a first path; and washing the vehicle using a washing module while flying according to the first path, wherein the first path is based on 3D shape data of the vehicle.

According to the invention, the first path: is further calculated based on the 3D shape data; or is further received from a device, wherein the device calculates the first path based on the 3D shape data.

In another example of the present embodiment, the method may further comprise before the cleaning: resting in a compartment of the vehicle or another; and flying out of the compartment when a pre-set condition is satisfied.

According to the invention, the method comprises that before the cleaning there is an arriving at a vicinity of the vehicle based on positioning and identifying the vehicle, wherein the identifying is based on the 3D shape data.

In another example of the present embodiment, the method may further comprise before the cleaning: detecting a dirty level and/or a dirt distribution of the vehicle and determine a scheme for the cleaning according to the dirty level and/or the detected dirt distribution.

In another example of the present embodiment, the method may further comprise before the cleaning: checking whether a door and/or a window of the vehicle is closed; and if the door and/or the window is not closed, sending a notification to a user and waiting the door and/or the window to be closed; or controlling the door and/or the window to be closed, wherein the checking is based on the 3D shape data.

In another example of the present embodiment, the cleaning may further comprise a pre-washing process before the washing process, wherein the pre-washing process comprises: detecting an object on the vehicle that need to be removed before the washing process; flying according to a second path; and removing the object using a pre-washing module while flying according to the second path.

In another example of the present embodiment, the cleaning may further comprise a drying process after the washing process, wherein the drying process comprises: flying according to a third path; and drying the vehicle using at least one rotor of the at least one unmanned aerial vehicle while flying according to the third path.

In another example of the present embodiment, the method may further comprise after the cleaning: sending a report to a user to indicate completion of the cleaning, wherein the report includes: one or more pictures/videos that captured after the cleaning; or one or more pictures/videos that captured before and after the cleaning.

In another example of the present embodiment, the method may further comprise sending status of the at least one unmanned aerial vehicle and/or a progress of providing the cleaning service to a user.

In another example of the present embodiment, the method may further comprise receiving a command from a user and starting to provide the cleaning service after receiving the command.

In accordance with an example, the method for providing a cleaning service for a vehicle is provided, comprising: a control device receiving a reservation for the service from a user; if the reservation is confirmed, the control device assigning at least one unmanned aerial vehicle to provide the service; and the at least one unmanned aerial vehicle cleaning the vehicle comprising: flying according to the first path; and washing the vehicle using the washing module while flying according to the first path, wherein the first path is based on 3D shape data of the vehicle.

In an example of this example, the first path may be further calculated by the at least one unmanned aerial vehicle based on the 3D shape data, wherein the 3D shape data are sent by the control device to the at least one unmanned aerial vehicle; or may be further received by the at least one unmanned aerial vehicle from the control device, wherein the control device calculates the first path based on the 3D shape data and sends the first path to the at least one unmanned aerial vehicle.

In accordance with a further example, the method implemented by the at least one unmanned aerial vehicle for providing a cleaning service for a vehicle is provided, comprising: receiving a reservation for a cleaning service from the vehicle or another; confirming the reservation; and starting to clean the vehicle when a pre-set condition is satisfied, wherein the cleaning comprising: flying according to the first path; and washing the vehicle using the washing module while flying according to the first path, wherein the first path is based on 3D shape data of the vehicle.

In accordance with a second exemplary embodiment of the present disclosure, an unmanned aerial vehicle for providing a cleaning service for a vehicle is provided, comprising: a main body; an aircraft module configured to fly according to a first path; a washing module, attached to the main body removably, configured to wash the vehicle while flying according to the first path; and a calculating module configured to calculate the first path based on 3D shape data of the vehicle. Said unmanned aerial vehicle comprising an identifying module configured to identify the vehicle based on the 3D shape data.

In an example of the present embodiment, the unmanned aerial vehicle may further comprise at least one of:; a checking and notifying module configured to check whether a door and/or a window of the vehicle is closed based on the 3D shape data and send a notification to a user if the door and/or the window is not closed; a pre-washing module, attached to the main body removably, configured to remove an object on the vehicle that need to be removed before washing while the aircraft module flying according to a second path; a rotor configured to dry the vehicle while the aircraft module flying according to a third path; a waxing module, attached to the main body removably, configured to wax the vehicle while the aircraft module flying according to a fourth path; and a reporting module configured to send a report to the user to indicate completion of the service.

In another example of the present embodiment, the unmanned aerial vehicle may further comprise a distance sensor configured to sense the distance between the vehicle and the unmanned aerial vehicle.

In another example of the present embodiment, the unmanned aerial vehicle may further comprise two or more distance sensors attached onto the bottom of the unmanned aerial vehicle with pre-determined distanced therebetween, wherein the two or more distance sensors are configured to enable the unmanned aerial vehicle to keep a specific attitude by sensing the distance between each of the sensors and the vehicle.

In accordance with a third exemplary embodiment of the present disclosure, a system for providing a cleaning service for a vehicle is provided, comprising: a control device configured to: receive a reservation for the service from a user; and if the reservation is confirmed, assign at least one unmanned aerial vehicle to provide the service, and the at least one unmanned aerial vehicle configured to: fly according to the first path; and wash the vehicle using the washing module while flying according to the first path, wherein the first path is based on 3D shape data of the vehicle.

According to the invention, the first path may be further calculated by the at least one unmanned aerial vehicle based on the 3D shape data, wherein the 3D shape data are sent by the control device to the at least one unmanned aerial vehicle; or may be further received by the at least one unmanned aerial vehicle from the control device, wherein the control device calculates the first path based on the 3D shape data and sends the first path to the at least one unmanned aerial vehicle.

In accordance with another example, a system for providing a cleaning service for a vehicle is provided, comprising: one or more processors; and one or more memories configured to store a series of computer executable instructions, wherein the series of computer executable instructions, when executed by the one or more processors, cause the one or more processors to perform the above mentioned method.

In accordance with a fourth exemplary embodiment of the present disclosure, a non-transitory computer readable medium having instructions stored thereon that, when executed by one or more processors, causing the one or more processors to perform the steps of the above mentioned method is provided.

### BRIEF DESCRIPTION OF THE DRAWINGS

The above and other aspects and advantages of the present disclosure will become apparent from the following detailed description of exemplary embodiments taken in conjunction with the accompanying drawings which illustrate, by way of example, the principles of the present disclosure. Note that the drawings are not necessarily drawn to scale.
Fig. 1 illustrates a flow chart of a method for cleaning a vehicle by at least one unmanned aerial vehicle (UAV) in accordance with an exemplary embodiment of the present disclosure.
Fig. 2 illustrates a flow chart of a method for providing a cleaning service for a vehicle in accordance with another exemplary embodiment of the present disclosure.
Fig. 3 illustrates a flow chart of a method for providing a cleaning service for a vehicle in accordance with another exemplary embodiment of the present disclosure.
Fig. 4 illustrates a flow chart of a method for providing a cleaning service for a vehicle in accordance with another exemplary embodiment of the present disclosure.
Fig. 5 illustrates a flow chart of a method for providing a cleaning service for a vehicle in accordance with another exemplary embodiment of the present disclosure.
Fig. 6 illustrates a flow chart of a method for providing a cleaning service for a vehicle in accordance with another exemplary embodiment of the present disclosure.
Fig. 7 illustrates a flow chart of a method for providing a cleaning service for a vehicle in accordance with another exemplary embodiment of the present disclosure.
Fig. 8 illustrates a block diagram of a UAV for providing a cleaning service for a vehicle in accordance with another exemplary embodiment of the present disclosure.
Fig. 9 illustrates a block diagram of a UAV for providing a cleaning service for a vehicle in accordance with another exemplary embodiment of the present disclosure.
Fig. 10 illustrates a block diagram of a system for providing a cleaning service for a vehicle in accordance with another exemplary embodiment of the present disclosure.
Fig. 11 illustrates a general hardware environment wherein the present disclosure is applicable in accordance with another exemplary embodiment of the present disclosure.
Fig. 12 schematically shows a UAV for providing a cleaning service for a vehicle in accordance with another exemplary embodiment of the present disclosure, wherein a washing module of the UAV is not rotated in (a), and the washing module is rotated in (b).
Fig. 13 schematically shows a UAV for providing a cleaning service for a vehicle in accordance with another exemplary embodiment of the present disclosure, wherein the UAV with two distance sensors may keep a specific attitude by using these sensors.

### DETAILED DESCRIPTION OF THE PREFERRED EMBODIMENTS

In the following detailed description, numerous specific details are set forth to provide a thorough understanding of the described exemplary embodiments. It will be apparent, however, to one skilled in the art that the described embodiments can be practiced without some or all of these specific details. In other exemplary embodiments, well known structures or process steps have not been described in detail in order to avoid unnecessarily obscuring the concept of the present disclosure.

The term "vehicle" used through the specification refers to a car, an airplane, a helicopter, a ship, or the like.

The term "unmanned aerial vehicle" or "UAV" used through the specification refers to a machine able to fly, including an unmanned drone, an unmanned helicopter, an unmanned robot, an unmanned aerial system, or the like. The UAV according to the present disclosure may have functions of an unmanned ground vehicles or an unmanned water vehicles. The UAV according to the present disclosure may pilot itself or be piloted by a control apparatus or an operator. The UAV according to the present disclosure may have a wing/wings or have no wing. The wing of the UAV according to the present disclosure may be fixed or rotary.

The term "clean" used through the specification refers to making something cleaner by washing, flushing, brushing, wiping, vacuuming, blowing, or the like.

The term "wash" used through the specification refers to making something cleaner with or without water, soap, detergent, or the like.

The term "attitude" used through the specification refers to a posture or a gesture of a UAV, e.g., an orientation or a tilt angle of the UAV with respect to another entity.

The term "rest" used through the specification refers to being in a position where something is supported or accommodated rather than not doing anything.

The term "door" used through the specification refers to a component that may move to open and close an entrance to a compartment of a vehicle, comprising a side door, a rear door, a trunk lid of a vehicle, and the like.

The term "attached to" used through the specification refers to attaching directly or via an intermediate component. The attaching according to the present disclosure may be mechanically or magnetically.

The term "A or B" used through the specification refers to "A and B" and "A or B" rather than meaning that A and B are exclusive, unless otherwise specified.

The term "and/or" used through the specification refers to any and all combinations of one or more of the associated listed items.

The terms "vertical", "horizontal" and similar expression used through the specification are intended for the purposes of illustration only.

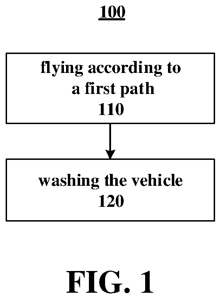

Referring first to Fig. 1, it illustrates a flow chart showing method 100 for providing a cleaning service for a vehicle in accordance with an exemplary embodiment of the present disclosure. Method 100 is performed by a UAV. The steps of method 100 presented below are intended to be illustrative. Method 100 comprises cleaning the vehicle by at least one UAV, wherein the cleaning comprises a washing process and the washing process comprises steps 110 and 120.

In some embodiments, the at least one UAV may receive a command from a user and start method 100 once receiving the command, so the user may trigger the UAV to start cleaning. The user may be for example a person, a device (e.g., a mobile device, a smart phone, a remoter control, or the like), or an autonomous vehicle that made a reservation for the cleaning service. In some embodiments, the user may be an owner or a supervisor of the vehicle which may be a person, a device, or a vehicle. In some embodiments, the user may be a controller of the vehicle.

At step 110, flying according to a first path is performed. At step 120, the at least one UAV washes the vehicle using a washing module while flying according to the first path. The first path is suitable for the shape of the vehicle. In some cases, the first path may also be suitable for the characteristic of the washing model, e.g. the shape, size, operating status (e.g., traveling distance and rotating angle), or the like. In some embodiments, the first path may be calculated by the UAV based on 3D shape data of the vehicle, which may be obtained in advance. In some embodiments, the first path may be calculated also by at least one characteristic of the washing module. In some embodiments, the first path may be received from another entity, for example, the control device to be described hereinafter. Wherein the entity calculates the first path based on the 3D shape data. In some embodiments, method 100 may be performed by a plurality of UAVs in cooperation with each other. Each of the plurality of UAVs may have an individual first path. The individual first path may be calculated by the each of the plurality of UAVs itself or be received form another entity. The entity may calculate a plurality of first paths for the plurality of UAVs and may send each of the plurality of first paths to each of the plurality of UAVs respectively.

The 3D shape data mentioned above may be a CAD model, which can be obtained e.g. from other entities, or may be stored in a storage device of a UAV.

The washing module may include at least one of a water tank, a foam tank, a detergent tank, a sprayer, a shower, a nozzle, a vacuum, a brush, and a wiper. The washing model may travel and rotate with respect to a main body of the UAV. The operating status of the washing model may be adjusted by travelling and/or rotating with respect to the main body. The washing module may be a part of the UAV, one or more devices placed in a compartment of the vehicle or another vehicle, or one or more devices placed in a station (e.g., a service station, a charging station, a docking station, or the like) for the cleaning service. In some embodiments, the washing module may be replaced for example if the water tank is empty, the wiper is dirty, or the like.

In some embodiments, the UAV may detect a dirty level and/or a dirt distribution of the vehicle before the cleaning and determine a scheme for the cleaning according to the dirty level and/or the dirt distribution detected. For example, the UAV may take some pictures or videos for the vehicle via a camera before the cleaning, and detect the dirty level and/or the dirt distribution of the vehicle according to the pictures or videos. The scheme of the cleaning may include a number of times and/or a speed for the cleaning, a region of the vehicle to be cleaned focusedly, amount of detergent, water, or battery power to be consumed, or the like. For example, if the dirty level detected is above a first threshold, the UAV may determine that the cleaning will be performed more than once, in a lower speed, with more detergent and/or water, or the like. For example, if the dirty distribution detected indicate that a side surface of the vehicle is dirtier than other regions, the UAV may determine to clean the side surface more than once, in a lower speed, with more detergent and/or water, or the like. For example, the UAV may calculate amount of water, detergent, or battery power to be consumed according to the dirty level and/or the dirt distribution detected, so as to determine if a whole cleaning service may be provided based on amount of water, detergent, or battery power of the UAV. If determining a whole cleaning service may not be provided, the UAV may send a notification to a user.

In some embodiments, the UAV may send status of the UAV and/or a progress of the cleaning service to the user. For example, the UAV may send status of the UAV to the user in real time, in near real time, or periodically. The status of the UAV may include remaining power of the battery, remaining amount of water in the water tank, remaining amount of detergent in the detergent tank, damage status, dirty status, or wear status of the brushes or wipers, failure status of the cleaning, or the like. In some embodiments, the user may recharge or replace the battery, refill the water tank or the detergent tank, replace the brushes or wipers, restart or reset the UAV manually according to the received status. In some embodiments, the UAV may send a progress of the cleaning service. For example, the progress may include the UAV is ready for the cleaning service, the cleaning service is started, the pre-washing process is performing, the washing process is performing, the drying process is performing, the waxing process is performing, the cleaning is completed, the cleaning is failed, and so on. The progress of the cleaning service may be updated in real time, in near real time, or periodically, so that the user may learn the progress of the cleaning service at any time.

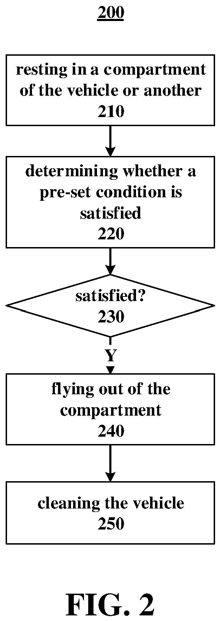

Referring to Fig. 2, it illustrates a flow chart showing method 200 for providing a cleaning service for a vehicle in accordance with another exemplary embodiment of the present disclosure. Method 200 may be performed by e.g. a UAV to be described hereinafter, or other entities. The steps of method 200 presented below are intended to be illustrative.

As shown in Fig. 2, at step 210, the UAV may rest in a compartment of a vehicle. In some embodiments, the vehicle may be the target vehicle for which the cleaning service will be provided, or may be another vehicle. In some embodiments, the vehicle may be an autonomous vehicle (e.g. an unmanned vehicle). The compartment may be a passenger compartment (e.g., a cab, a cockpit, or the like) or a cargo compartment (e.g. a trunk) of the vehicle.

In another exemplary embodiment of the present disclosure, resting in a station (e.g., a service station, a charging station, a docking station, or the like) may be performed alternatively at step 210.

At step 220, whether a pre-set condition is satisfied may be determined. In some embodiments, the pre-set condition may be a time to depart or to start the cleaning service. In some embodiments, the pre-set condition may be a period, e.g. 3 hours from a certain time. In some embodiments, the pre-set condition may be a condition or an event, e.g., after snowing or after a sandstorm. In some embodiments, the pre-set condition may be a command (e.g., in a form of a message, a signal, or the like) from another entity, e.g., from a user who make a reservation for the cleaning service or the target vehicle.

At steps 230 and 240, flying out of the compartment of the vehicle may be performed when the pre-set condition is satisfied. In some embodiments, when the pre-set condition is satisfied, the UAV may send a command to the vehicle in which the UAV is resting. The vehicle may, in response to the command, open a door, a lid, and/or a window to let the UAV out.

At step 250 the UAV may clean the vehicle. Step 250 may be the same as method 100 or 700, and thus their details are omitted here.

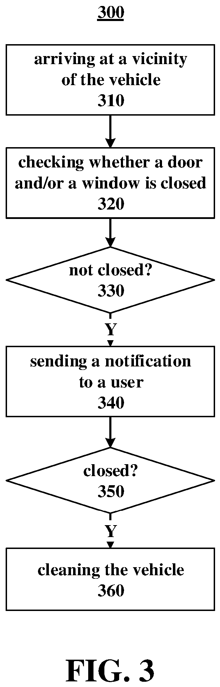

Referring to Fig. 3, it illustrates a flow chart showing method 300 for providing a cleaning service for a vehicle in accordance with another exemplary embodiment of the present disclosure. Method 300 may be performed by e.g. a UAV to be described hereinafter, or other entities. The steps of method 300 presented below are intended to be illustrative.

As shown in Fig. 3, at step 310, arriving at a vicinity of a target vehicle may be performed. The target vehicle may be a vehicle or a portion of a vehicle that a cleaning service may be performed, which does not have to be dirty, with unwanted marks, or the like. In some embodiments, step 310 may be performed based on positioning the UAV itself and the target vehicle. For example, the positioning may be performed based on LoRa and/or WiFi positioning technology so that the positioning information may be 3D positioning information with centimeter accuracy, including longitude information, latitude information, and altitude information. Positioning information indicating the location of the target vehicle may be obtained in advance, positioning information indicating the location of the UAV may be obtained in real-time or near real-time, and step 310 may be performed based on the positioning information. The positioning may also be performed based on GPS or other positioning technologies. In some embodiments, for example accurate positioning information could not be obtained, step 310 may be performed based on identifying the target vehicle additionally. The identifying may be performed based on the shape, size, color, license number of the target vehicle, and/or the like. Shape information (e.g., 3D shape data), size information, color information, license number information of the target vehicle may be obtained in advance, and identifying the target vehicle using these information and thus arriving at the vicinity of the target vehicle may be performed. Additionally, the UAV may be equipped with one or more distance sensors, e.g., ultrasound sensors, to sense the distance information between the UAV and the target vehicle, so that the UAV may arrive at the vicinity of the target vehicle with the help of the distance information. For example, at step 310, the UAV may arrive at a distance of 50 cm from the target vehicle.

At step 320, whether a door and/or a window of the target vehicle is closed may be checked. Step 320 may be performed based on the 3D shape data, i.e., the UAV may check whether a door and/or a window of the target vehicle is closed based on the 3D shape data of the target vehicle. In some embodiments, the 3D shape data presenting the target vehicle with all doors and all windows closed. The UAV may perform the checking by comparing an outline or an appearance of the target vehicle detected by the UAV with the 3D shape data, especially at a region of a door and/or a window. In some embodiments, the checking may be performed by a distance sensor (e.g., an ultrasound sensor) detecting at the region of a door and/or a window. The region of a door and/or a window may be determined via the 3D shape data of the target vehicle.

At steps 330 and 340, a notification may be sent to a user if the door and/or the window is not closed. In some embodiments, the user may be a person, a device or an autonomous vehicle that made a reservation for the cleaning service. In some embodiments, the user may be an owner or a supervisor of the target vehicle which may be a person, a device, or a vehicle. In some embodiments, the user may be a controller of the target vehicle. After receiving the notification, the user may control the target vehicle to close the door and/or the window.

At step 350, the UAV may check whether the door and/or the window is closed periodically and go forward to step 360 if the door and/or the window is closed. In some embodiments, the user may notify the UAV that the door and/or the window has been closed and thus step 350 may be omitted in this case.

**In** some embodiments, the UAV may control the door and/or the window to be closed by itself. In this case, a pairing (e.g., Bluetooth pairing) may be finished before or an authorization may be obtained before. Thus the UAV may control the door and/or the window automatically even if there are some safety barriers.

Step 360 may be the same as method 100 or 700, and thus their details are omitted here.

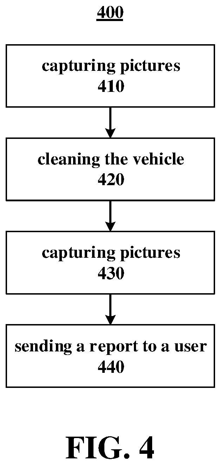

Referring to Fig. 4, it illustrates a flow chart showing method 400 for providing a cleaning service for a vehicle in accordance with another exemplary embodiment of the present disclosure. Method 400 may be performed by e.g. a UAV to be described hereinafter, or other entities. The steps of method 400 presented below are intended to be illustrative.

As shown in Fig. 4, at step 410 one or more pictures or videos may be captured before step 420. The pictures or videos may present a status of the vehicle before the cleaning.

Step 420 may be the same as method 100 or 700, and thus their details are omitted here.

At step 430, one or more pictures or videos may be captured after completion of step 420.

At step 440, a report indicate completion of the cleaning may be sent to a user. In some embodiments, the user may be a person, a device, or an autonomous vehicle that made a reservation for the cleaning service. In some embodiments, the user may be an owner or a supervisor of the target vehicle which may be a person, a device, or a vehicle. In some embodiments, the user may be a controller of the target vehicle.

**In** some embodiments, the report may include the one or more pictures or videos captured at step 430. The user may review the pictures to learn how clean the target vehicle may currently be. If the user is not satisfied with the clean degree of the target vehicle, the user may request the UAV to clean the target vehicle again. Step 420 may be re-performed to make the target vehicle much cleaner.

**In** some embodiments, the report may further include one or more pictures or videos captured at step 410, such that the user may learn the status (or dirty status, dirty distribution, or the like) of the vehicle before the cleaning visually. Thus, the user may further know the differences between the target vehicle before cleaning and that after cleaning by comparison of the pictures or videos.

In some embodiments, the report may not include any picture or video and thus both step 410 and step 430 may be omitted in this case.

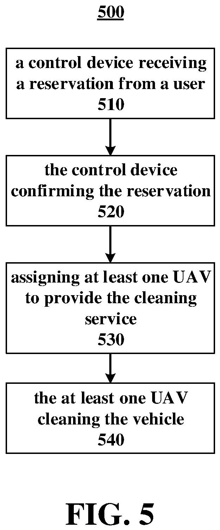

Referring to Fig. 5, it illustrates a flow chart showing method 500 for providing a cleaning service for a vehicle in accordance with another exemplary embodiment of the present disclosure. Method 500 may be performed by e.g. a control device to be described hereinafter, or other entities. The steps of method 500 presented below are intended to be illustrative.

As shown in Fig. 5, at step 510, a reservation for a cleaning service from a user may be received by a control device. The reservation for the cleaning service may be made by a user for a target vehicle. The user may be a person, a device, or an autonomous vehicle. In some embodiments, the user may be an owner (e.g. a person or a device) of the target vehicle. In this case, the user may make a reservation for the vehicle owned by the user or for other vehicles. In some embodiments, the user may be a supervisor of the target vehicle. In this case, the user may make a reservation for the vehicle supervised by the user or for other vehicles. In some embodiments, the user may be a controller (e.g. a control center of an autonomous vehicle) of the target vehicle. In this case, the user may make a reservation for the vehicle controlled by the controller or for other vehicles.

At step 520, the reservation may be confirmed by the control device. In some embodiments, if there is at least one UAV capable of doing the cleaning service at a certain time that the reservation indicates, the reservation may be confirmed.

At step 530, at least one UAV capable of doing the cleaning service may be assigned by the control device to provide the cleaning service.

At step 540, the at least one UAV may perform one of methods 100 to 400 and 700 or the combination thereof.

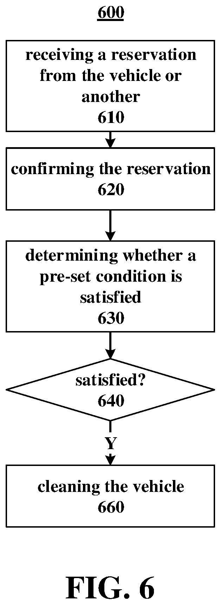

Referring to Fig. 6, it illustrates a flow chart showing method 600 for providing a cleaning service for a vehicle in accordance with another exemplary embodiment of the present disclosure. Method 600 may be performed by e.g. a UAV to be described hereinafter, or other entities. The steps of method 600 presented below are intended to be illustrative.

As shown in Fig. 6, at step 610, a reservation for a cleaning service from a vehicle may be received by the UAV. In some embodiments, the vehicle may be a neighboring vehicle. In some embodiments, the reservation may be made by a controller (e.g. a control center of an autonomous vehicle), an owner or a supervisor of the neighboring vehicle.

At step 620, the reservation may be confirmed by the UAV. In some embodiments, if the UAV is capable of do the cleaning service for the neighboring vehicle at a certain time that the reservation indicates, the reservation may be confirmed.

Steps 630, 640, and 660 may be the same as steps 220, 230, and 250 respectively, and thus their details are omitted here.

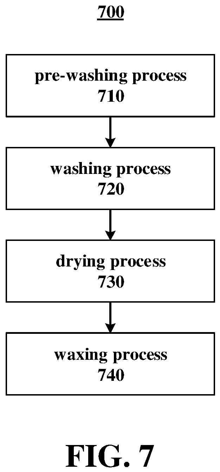

Referring to Fig. 7, it illustrates a flow chart showing method 700 for providing a cleaning service for a vehicle in accordance with another exemplary embodiment of the present disclosure. Method 700 may be performed by e.g. a UAV to be described hereinafter, or other entities. The steps of method 700 presented below are intended to be illustrative.

As shown in Fig. 7, method 700 may be the cleaning mentioned above. In some embodiments, method 700 may comprise a pre-washing process 710, a washing process 720, a drying process 730, and a waxing process 740.

The pre-washing process 710 may comprise detecting an object that need to be removed before the washing process 720; flying according to a second path; and removing the object using a pre-washing module while flying according to the second path. In some embodiments, the object may be dust, sand, stone that may scratch the target vehicle. In this case, the pre-washing module may be a flusher, a vacuum, air nozzle, or the like. In some embodiments, the object may be an unwanted mark, drawings, or the like. The pre-washing module may be a wiper or a bush with foam, soap, detergent, or the like. The pre-washing module may be a part of the UAV, one or more devices placed in a compartment of the vehicle or another vehicle, or one or more devices placed in a station (e.g., a service station, a charging station, a docking station, or the like) for the cleaning service. In some embodiments, the second path may be suitable for the shape of the target vehicle. In some cases, the second path may also be suitable for the position of the object and/or the characteristic of the pre-washing model. The second path may be calculated by e.g. the UAV based on 3D shape data of the target vehicle, or may be received from other entities. In some embodiments, the pre-washing process 710 may be performed by a plurality of UAVs in cooperation with each other. Each of the plurality of UAVs may have an individual second path.

The washing process 720 may comprise: flying according to the first path described above; and washing, using a washing module, the target vehicle while flying according to the first path. The first path is suitable for the shape of the target vehicle. In some cases, the first path may also be suitable for the characteristic of the washing model. In some embodiments, the first path may be calculated by e.g. the UAV based on 3D shape data of the target vehicle, or may be received from other entities. In some embodiments, the washing process 720 may be performed by a plurality of UAVs in cooperation with each other. Each of the plurality of UAVs may have an individual first path. The individual first path may be calculated by the each of the plurality of UAVs itself or be received form another entity. The entity may calculate a plurality of first paths for the plurality of UAVs and may send each of the plurality of first paths to each of the plurality of UAVs respectively. The washing module may comprise at least one of a water tank (e.g., which may contain water or other liquid for leaning), a detergent tank (e.g., which may output foam, soap, or the like), a shower, a flusher, a vacuum, air nozzle, a wiper (e.g., which may shake or vibrate to wipe a surface of the target vehicle), a bush (e.g., which may shake, vibrate or rotate to brush a surface of the target vehicle), or the like. The washing module may be a part of the UAV, one or more devices placed in a compartment of the vehicle or another vehicle, or one or more devices placed in a station (e.g., a service station, a charging station, a docking station, or the like) for the cleaning service.

The drying process 730 may comprise flying according to a third path and drying the target vehicle while flying according to the third path. In some embodiments, the UAV may have at least one rotor, and drying the target vehicle may be performed using the at least one rotor. The at least one rotor may compel air to flow and thus lift the UAV up. The drying process 730 may utilize the flowing air to blow the target vehicle after the washing process 720 to make it dry faster. The UAV may fly according to the third path suitable for the shape of the target vehicle (sometimes also suitable for the characteristic of the at least one rotor). The third path may be calculated by e.g. the UAV based on 3D shape data of the target vehicle, or may be received from other entities. In some embodiments, the drying process 730 may be performed by a plurality of UAVs in cooperation with each other. Each of the plurality of UAVs may have an individual third path.

The waxing process 740 may comprise flying according to a fourth path and waxing the target vehicle using a waxing module while flying according to the fourth path. The waxing module may comprise a vehicle wax tank, a sprayer and a wiper for the wax, or the like. The waxing module may be a part of the UAV, one or more devices placed in a compartment of the vehicle or another vehicle, or one or more devices placed in a station (e.g., a service station, a charging station, a docking station, or the like) for the cleaning service. The fourth path may be suitable for the shape of the target vehicle. In some cases, the fourth path may also be suitable for the characteristic of the waxing model. The fourth path may be calculated by e.g. the UAV based on 3D shape data of the target vehicle, or may be received from other entities. In some embodiments, the waxing process 740 may be performed by a plurality of UAVs in cooperation with each other. Each of the plurality of UAVs may have an individual fourth path.

Any one of the first path, the second path, the third path and the fourth path described above may be the same with or different from another one.

In some embodiments, any of the methods described above may be accomplished with one or more additional steps or processes not described, and/or without one or more of the steps or processes discussed. Additionally, the order in which the steps or processes of the methods are illustrated in the figure and described as below is not intended to be limiting. In some embodiments, the methods may be implemented in one or more processing devices (e.g., a digital processor, an analog processor, a digital circuit designed to process information, an analog circuit designed to process information, a state machine, and/or other mechanisms for electronically processing information). The one or more processing devices may include one or more modules executing some or all of steps or processes of the methods in response to instructions stored electronically on an electronic storage medium. The one or more processing modules may include one or more devices configured through hardware, firmware, and/or software to be specifically designed for execution of one or more of steps or processes of the methods.

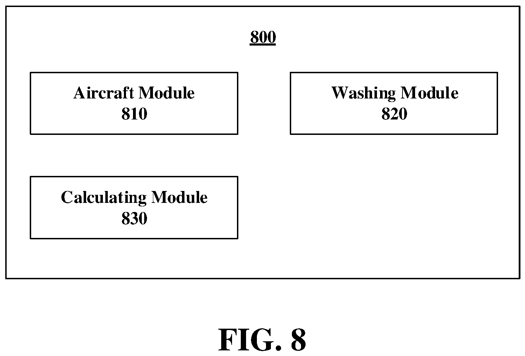

Fig. 8 illustrates a block diagram of a UAV 800 for providing a cleaning service for a vehicle (e.g., method 100 as shown in Fig. 1) in accordance with an exemplary embodiment of the present disclosure. The UAV 800 may be implemented by hardware, software, firmware, or any combination thereof to carry out the principles of the present disclosure. It is understood by those skilled in the art that the blocks described in Fig. 8 may be combined or separated into sub-blocks to implement the principles of the present disclosure as described above. Therefore, the description herein may support any possible combination or separation or further definition of the blocks described herein.

Referring to Fig. 8, the UAV 800 for providing a cleaning service for a vehicle comprises: an aircraft module 810 configured to fly according to the first path; the washing module 820, attached to the main body of the unmanned aerial vehicle removably, configured to wash the vehicle while flying according to the first path; and the calculating module 840 configured to calculate the first path based on 3D shape data of the vehicle and sometimes also based on at least one characteristic of the washing module 820.

The aircraft module 810 may fly under its own power to a location in an unmanned manner and may also fly according to a path, e.g. the first path. The first path may be suitable for the shape of the target vehicle and sometimes may also be suitable for the characteristic of the washing model. In some embodiments, the first path may be calculated by e.g. the UAV based on 3D shape data of the target vehicle, or may be received from other entities. In some embodiments, the washing process 720 may be performed by a plurality of UAVs in cooperation with each other. Each of the plurality of UAVs may have an individual first path. The individual first path may be calculated by the each of the plurality of UAVs itself or be received form another entity. The entity may calculate a plurality of first paths for the plurality of UAVs and may send each of the plurality of first paths to each of the plurality of UAVs respectively.

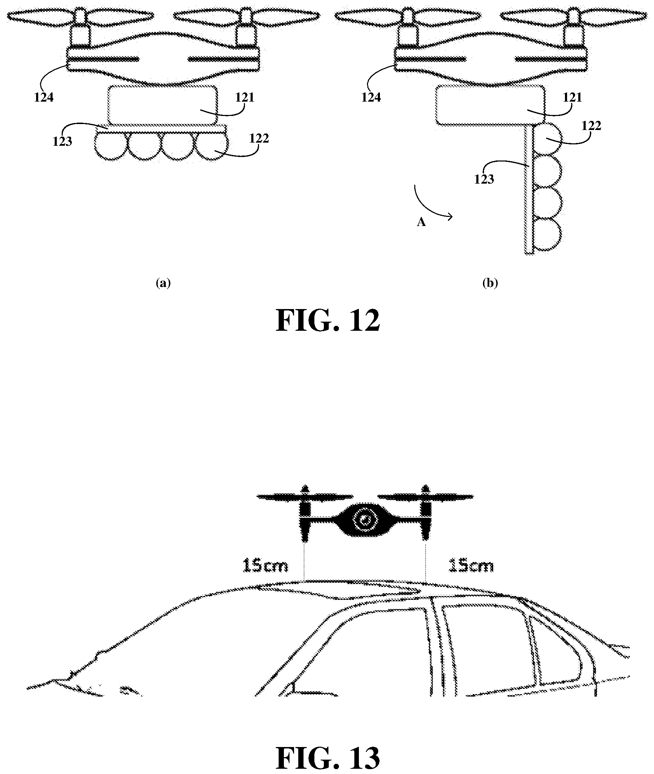

The washing module 820 may comprise at least one of a water tank (e.g., which may contain water or other liquid for leaning), a detergent tank (e.g., which may output foam, soap, or the like), a sprayer, a shower, a flusher, a vacuum, air nozzle, a wiper (e.g., which may shake or vibrate to wipe a surface of the target vehicle), a bush (e.g., which may shake, vibrate or rotate to brush a surface of the target vehicle), or the like. In some embodiments, the washing model 820 may travel and rotate with respect to a main body of the UAV as shown in Fig. 12. The operating status of the washing model 820 may be adjusted by travelling and/or rotating with respect to the main body. Referring to Fig. 12, the washing model 820 comprise a tank 121, four brushes 122, and a mechanism 123 that may be able to make the four brushes 122 travel and rotate with respect to the main body 124. By comparing (b) with (a) in Fig. 12, it can be seen that the mechanism 123 may rotate in the direction A as shown in (b), to make the four brushes 122 change to a vertical position suitable for cleaning a side surface of the target vehicle as shown in (b) from a horizontal position suitable for cleaning a ceiling surface of the target vehicle as shown in (a). Although the travelling of the four brushes 122 is not shown, it is appreciated that the four brushes 122 may travel in any direction, e.g., vertical, horizontal, inclined direction, or the like.

The washing module 820 may attach to the main body removably, therefore the washing module 820 may be removed and replace with another module.

The calculating module 840 may calculate the path based on the 3D shape data of the target vehicle and sometimes also based on at least one characteristic of the washing module. The calculating module 840 may be any kinds of processing devices that can implement data computing.

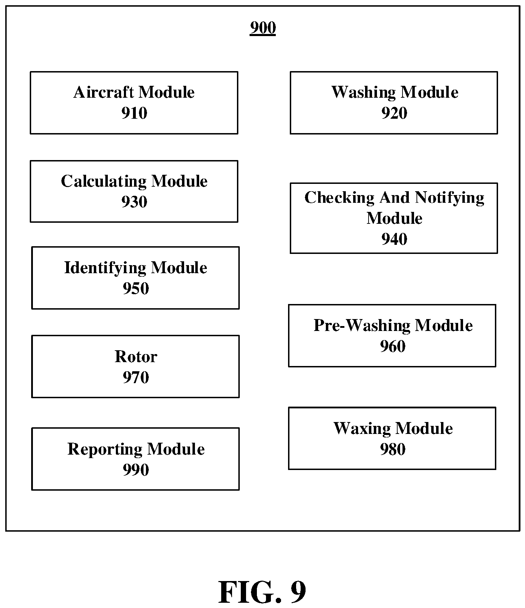

Fig. 9 illustrates a block diagram of a UAV 900 for a cleaning service (e.g., any of methods 100, 200, 300, 400, 600, and 700 as shown in Figs. 1, 2, 3, 4, 6, and 7 respectively) in accordance with another exemplary embodiment of the present disclosure. The UAV 900 may be implemented by hardware, software, firmware, or any combination thereof to carry out the principles of the present disclosure. It is understood by those skilled in the art that the blocks described in Fig. 9 may be combined or separated into sub-blocks to implement the principles of the present disclosure as described above. Therefore, the description herein may support any possible combination or separation or further definition of the blocks described herein.

Referring to Fig. 9, the UAV 900 for a cleaning service comprises: an aircraft module 910, a washing module 920, and a calculating module 940 which may be the same as modules 810, 820, and 840 respectively, and thus their details are omitted here.

Beside comprising an identifying module 950 configured to identify the target vehicle based on the 3D shape data, the UAV 900 may further comprise at least one of:; a checking and notifying module 940 configured to check whether a door and/or a window of the vehicle is closed based on the 3D shape data and send a notification to a user if the door and/or the window is not closed; a pre-washing module 960, attached to the main body removably, configured to remove an object on the vehicle that need to be removed before washing while the aircraft module 910 flying according to a second path; a rotor 970 configured to dry the vehicle while the aircraft module 910 flying according to a third path; a waxing module 980, attached to the main body removably, configured to wax the vehicle while the aircraft module 910 flying according to a fourth path; and a reporting module 990 configured to send a report to the user to indicate completion of the cleaning service.

The identifying module 950 may perform the identifying based on the shape, size, color, license number of the target vehicle, and/or the like. In some embodiments, the identifying module 950 may identify the target vehicle based on the 3D shape data, e.g., a CAD model. Shape information (e.g., a CAD model), size information, color information, license number information of the target vehicle may be obtained in advance, and the identifying module 950 may use this information to identify the target vehicle and thus arrive at the vicinity of the target vehicle. Please note that the identifying module 950 may use a camera to detect the shape, size, color, license number of a vehicle.

The checking and notifying module 940 may check whether a door and/or a window of the target vehicle is closed and may send a notification to a user if the door and/or the window is not closed. The checking and notifying module 940 may perform the checking based on the 3D shape data of the target vehicle. In some embodiments, the 3D shape data presenting the target vehicle with all doors and all windows closed. The checking and notifying module 940 may perform the checking by comparing an outline or an appearance of the target vehicle with the 3D shape data, especially at a region of a door and/or a window. The outline or an appearance of the target vehicle may be detected via a camera. In some embodiments, the checking and notifying module 940 may perform the checking by a distance sensor (e.g., an ultrasound sensor) detecting at the region of a door and/or a window. The region of a door and/or a window may be determined by the checking and notifying module 940 based on the 3D shape data of the target vehicle. The checking and notifying module 940 may send a notification to a user if the door and/or the window is not closed. In some embodiments, the user may be a person, a device, or an autonomous vehicle that made a reservation for the cleaning service. In some embodiments, the user may be an owner or a supervisor of the target vehicle which may be a person, a device, or a vehicle. In some embodiments, the user may be a controller of the target vehicle. After receiving the notification, the user may control the target vehicle to close the door and/or the window.

The pre-washing module 960 may remove an object on the vehicle that need to be removed before washing while the aircraft module 910 flying according to a second path, i.e., perform the pre-washing process 710. In some embodiments, the second path may be suitable for the shape of the target vehicle. In some cases, the second path may also be suitable for the position of the object and/or the characteristic of the pre-washing model. The second path may be calculated by e.g. the UAV based on 3D shape data of the target vehicle, or may be received from other entities. In some embodiments, the pre-washing process 710 may be performed by a plurality of UAVs in cooperation with each other. Each of the plurality of UAVs may have an individual second path.

The pre-washing module 960 may detect an object that need to be removed before the washing process 720 and remove the object using the pre-washing module 960. In some embodiments, the object may be dust, sand, stone that may scratch the target vehicle. In this case, the pre-washing module 960 may be a flusher, a vacuum, air nozzle, or the like. In some embodiments, the object may be an unwanted mark, drawings, or the like. The pre-washing module 960 may be a wiper or a bush with foam, soap, detergent, or the like. The pre-washing module 960 may attach to the main body removably, therefore the pre-washing module 960 may be removed and replace with another module.

The rotor 970 may be able to dry the target vehicle while the aircraft module 910 flying according to a third path, i.e., perform the drying process 730. The rotor 970 may compel air to flow and thus lift the UAV up. The flowing air compelled by the rotor 970 may blow the target vehicle after the washing process 720 to make it dry faster. In some embodiments, the third path may be suitable for the shape of the target vehicle. In some cases, the third path may also be suitable for the characteristic of the at least one rotor. The third path may be calculated by e.g. the UAV based on 3D shape data of the target vehicle, or may be received from other entities. In some embodiments, the drying process 730 may be performed by a plurality of UAVs in cooperation with each other. Each of the plurality of UAVs may have an individual third path.

The waxing module 980 may wax the target vehicle while the aircraft module 910 flying according to a fourth path, i.e., perform the waxing process 740. The waxing module 980 may comprise a vehicle wax tank, a sprayer and a wiper for the wax, or the like. The waxing module 980 may attach to the main body removably, therefore the waxing module 980 may be removed and replace with another module. The fourth path may be suitable for the shape of the target vehicle. In some cases, the fourth path may also be suitable for the characteristic of the waxing model. The fourth path may be calculated by e.g. the UAV based on 3D shape data of the target vehicle, or may be received from other entities. In some embodiments, the waxing process 740 may be performed by a plurality of UAVs in cooperation with each other. Each of the plurality of UAVs may have an individual fourth path.

The reporting module 990 may send a report to the user to indicate completion of the cleaning service. In some embodiments, the user may be a person, a device, or an autonomous vehicle that made a reservation for the cleaning service. In some embodiments, the user may be an owner or a supervisor of the target vehicle which may be a person, a device, or a vehicle. In some embodiments, the user may be a controller of the target vehicle. In some embodiments, the report may include the one or more pictures captured by a camera. The user may review the pictures to learn how clean the target vehicle may currently be. If the user is not satisfied with the clean degree of the target vehicle, the user may request the UAV to clean the vehicle again. In some embodiments, the report may further include the one or more pictures captured before the cleaning. Thus, the user may know the differences between the target vehicle before cleaning and that after cleaning by comparison. In some embodiments, the report may not include any picture.

In some embodiments, the UAV may comprise a distance sensor, for example, an ultrasound sensor. The distance sensor may be configured to sense the distance between the UAV and the vehicle. Such that the UAV may keep a pre-determined distance from the vehicle. The UAV may obtain the distance from the vehicle with centimeter accuracy by using the ultrasound sensor. In some cases, the distance sensor may be configured to sense the distance between the UAV and the ground, the barrier or any other object.

In some embodiments, the UAV may comprise two or more distance sensors. The two or more distance sensors may be attached onto the bottom of the UAV and arranged in a pre-determined distance between each other. The two or more distance sensors are configured to enable the UAV to keep a specific attitude by sensing the distance between each of the sensors and the vehicle. For example, the distance sensor may be an ultrasound sensor, which may sense a distance with centimeter accuracy. Referring to Fig. 13, the UAV is equipped with two ultrasound sensors at the bottom of the UAV. Each of the two ultrasound sensors may sense the distance between the sensor and the vehicle. As shown in Fig. 13, the distances sensed by the two ultrasound sensors are both 15 cm, which indicate that the attitude of the UAV is in parallel with the upper surface of the vehicle. If the UAV turns its body to one side, the distances sensed by the two ultrasound sensors may be not the same, for example 9cm and 15cm, which indicate the attitude of the UAV is having a tilt angle with respect to the upper surface of the vehicle. By using the two sensors, the UAV may calculate and thus adjust the attitude of the UAV.

Any of the modules described above may communicate with each other and with other external entities.

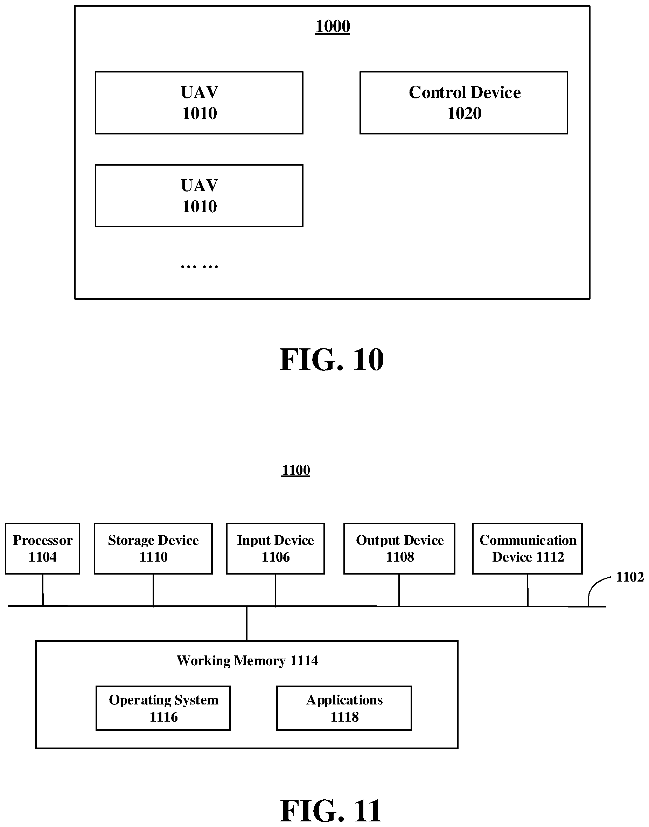

Referring to Fig. 10, there is shown a block diagram of system 1000 for providing a cleaning service for a vehicle in accordance with an exemplary embodiment of the present disclosure. System 1000 for a cleaning service may comprise at least one UAV 1010 capable of cleaning a vehicle and a control device 1020.

The control device 1020 may be configured to: receive a reservation for a cleaning service from a user; assign, if the reservation is confirmed, at least one unmanned aerial vehicle to perform the cleaning service; and send 3D shape data of a target vehicle to the at least one unmanned aerial vehicle. The control device 1020 may be implemented as cloud-based services and storage.

The control device 1020 may receive a reservation for a cleaning service. The reservation for the cleaning service may be made by a user for a target vehicle. The user may be a person, a device, or an autonomous vehicle. In some embodiments, the user may be an owner (e.g. a person or a device) of the target vehicle. In this case, the user may make a reservation for the vehicle owned by the user or for other vehicles. In some embodiments, the user may be a supervisor of the target vehicle. In this case, the user may make a reservation for the vehicle supervised by the user or for other vehicles. In some embodiments, the user may be a controller (e.g. a control center of an autonomous vehicle) of the target vehicle. In this case, the user may make a reservation for the vehicle controlled by the controller or for other vehicles.

The control device 1020 may confirm the reservation. In some embodiments, if there is, in system 1000, at least one UAV 1010 capable of doing the cleaning service at a certain time that the reservation indicates, the control device 1020 confirms the reservation.

The control device 1020 may assign at least one UAV 1010 capable of doing the cleaning service to provide the cleaning service. The at least one UAV 1010 may perform one of methods 100 to 400 or the combination thereof.

The control device 1020 may send 3D shape data, e.g., a CAD model, of a target vehicle to the at least one UAV 1010. In some embodiments, the control device 1020 may further send at least one flying path that calculated based on the 3D shape data for the cleaning service to the at least one UAV 1010 respectively.

The at least one UAV 1010 is configured to fly according to the first path; and wash the vehicle using the washing module while flying according to the first path, wherein the first path is based on 3D shape data of the vehicle and sometimes also based on at least one characteristic of the washing module. The first path may be calculated by the at least one UAV 1010 or be received by the at least one UAV 1010 from the control device 1020. The at least one UAV 1010 may be the same as the aforementioned UAV 800 or UAV 900, and thus the details are omitted here.

Fig. 11 illustrates a general hardware environment 1100 wherein the present disclosure is applicable in accordance with an exemplary embodiment of the present disclosure.

With reference to FIG. 11, a hardware environment 1100, which is an example of the hardware device that may be applied to the aspects of the present disclosure, will now be described. The hardware environment 1100 may be any machine configured to perform processing and/or calculations, may be but is not limited to a workstation, a server, a desktop computer, a laptop computer, a tablet computer, a personal data assistant, a smart phone, an on-vehicle computer or any combination thereof. The aforementioned UAV 800, UAV 900, UAV 1010 or control device 1020 may be wholly or at least partially implemented by the hardware environment 1100 or a similar device or system.

The hardware environment 1100 may comprise elements that are connected with or in communication with a bus 1102, possibly via one or more interfaces. For example, the hardware environment 1100 may comprise the bus 1102, and one or more processors 1104, one or more input devices 1106 and one or more output devices 1108. The one or more processors 1104 may be any kinds of processors, and may comprise but are not limited to one or more general-purpose processors and/or one or more special-purpose processors (such as special processing chips). The input devices 1106 may be any kinds of devices that can input information to the hardware environment 1100, and may comprise but are not limited to a mouse, a keyboard, a touch screen, a microphone and/or a remote control. The output devices 1108 may be any kinds of devices that can present information, and may comprise but are not limited to display, a speaker, a video/audio output terminal, a vibrator and/or a printer. The hardware environment 1100 may also comprise or be connected with non-transitory storage devices 1110 which may be any storage devices that are non-transitory and can implement data stores, and may comprise but are not limited to a disk drive, an optical storage device, a solid-state storage, a floppy disk, a flexible disk, hard disk, a magnetic tape or any other magnetic medium, a compact disc or any other optical medium, a ROM (Read Only Memory), a RAM (Random Access Memory), a cache memory and/or any other memory chip or cartridge, and/or any other medium from which a computer may read data, instructions and/or code. The non-transitory storage devices 1110 may be detachable from an interface. The non-transitory storage devices 1110 may have data/instructions/code for implementing the methods and steps which are described above. The hardware environment 1100 may also comprise a communication device 1112. The communication device 1112 may be any kinds of device or system that can enable communication with external apparatuses and/or with a network, and may comprise but are not limited to a modem, a network card, an infrared communication device, a wireless communication device and/or a chipset such as as Bluetooth^{™} device, 1302.11 device, WiFi device, WiMax device, cellular communication facilities and/or the like.

When the hardware environment 1100 is used as an on-vehicle device, it may also be connected to external device, for example, a GPS receiver, sensors for sensing different environmental data such as an acceleration sensor, a wheel speed sensor, a gyroscope and so on. In this way, the hardware environment 1100 may, for example, receive location data and sensor data indicating the travelling situation of the vehicle. When the hardware environment 1100 is used as an on-vehicle device, it may also be connected to other facilities (such as an engine system, a wiper, an anti-lock Braking System or the like) for controlling the traveling and operation of the vehicle.

In addition, the non-transitory storage device 1110 may have map information and software elements so that the processor 1104 may perform route guidance processing. In addition, the output device 1106 may comprise a display for displaying the map, the location mark of the vehicle and also images indicating the travelling situation of the vehicle. The output device 1106 may also comprise a speaker or interface with an earphone for audio guidance.

The bus 1102 may include but is not limited to Industry Standard Architecture (ISA) bus, Micro Channel Architecture (MCA) bus, Enhanced ISA (EISA) bus, Video Electronics Standards Association (VESA) local bus, and Peripheral Component Interconnect (PCI) bus. Particularly, for an on-vehicle device, the bus 1102 may also include a Controller Area Network (CAN) bus or other architectures designed for application on an automobile.

The hardware environment 1100 may also comprise a working memory 1114, which may be any kind of working memory that may store instructions and/or data useful for the working of the processor 1104, and may comprise but is not limited to a random access memory and/or a read-only memory device.

Software elements may be located in the working memory 1114, including but are not limited to an operating system 1116, one or more application programs 1118, drivers and/or other data and codes. Instructions for performing the methods and steps described in the above may be comprised in the one or more application programs 1118, and the modules of the aforementioned UAV 800, 900 may be implemented by the processor 1104 reading and executing the instructions of the one or more application programs 1118. More specifically, the function of the calculating module 840, 940 of the aforementioned UAV 800, 900 may, for example, be implemented by the processor 1104 when executing an application 1118 having instructions to perform calculating the flying path. In addition, the function of the identifying module 950 of the aforementioned UAV 900 may, for example, be implemented by the processor 1104 when executing an application 1118 having instructions to perform identifying the target vehicle. Other modules of the aforementioned UAV 800, 900 may also, for example, be implemented by the processor 1104 when executing an application 1118 having instructions to perform one or more of the aforementioned respective steps. The executable codes or source codes of the instructions of the software elements may be stored in a non-transitory computer-readable storage medium, such as the storage device(s) 1110 described above, and may be read into the working memory 1114 possibly with compilation and/or installation. The executable codes or source codes of the instructions of the software elements may also be downloaded from a remote location.

Those skilled in the art may clearly know from the above embodiments that the present disclosure may be implemented by software with necessary hardware, or by hardware, firmware and the like. Based on such understanding, the embodiments of the present disclosure may be embodied in part in a software form. The computer software may be stored in a readable storage medium such as a floppy disk, a hard disk, an optical disk or a flash memory of the computer. The computer software comprises a series of instructions to make the computer (e.g., a personal computer, a service station or a network terminal) execute the method or a part thereof according to respective embodiment of the present disclosure.

## Claims

1. A method implemented by at least one unmanned aerial vehicle for providing a cleaning service for a vehicle, **characterized by** comprising:
cleaning the vehicle (250, 360,420,540,660), wherein the cleaning comprises a washing process comprising: flying according to a first path (110); and
washing the vehicle using a washing module while flying according to the first path (120),
wherein the first path is based on 3D shape data of the vehicle, wherein the first path:
is further calculated based on the 3D shape data; or
is further received from a device, wherein the device calculates the first path
based on the 3D shape data, **characterized by** further comprising before the cleaning (360) arriving at a vicinity of the target vehicle based on positioning the unmanned aerial vehicle itself and the vehicle and identifying the target vehicle, wherein the identifying is based on the 3D shape data (310).

2. The method of claim 1, further comprising before the cleaning (250):
resting in a compartment of the vehicle or another (210); and
flying out of the compartment when a pre-set condition is satisfied (240).

3. The method of claim 1, wherein the positioning is performed based on LoRa and/or WiFi positioning technology.

4. The method of claim 1, further comprising before the cleaning:
detecting a dirty level and/or a dirt distribution of the vehicle and determine a scheme for the cleaning according to the dirty level and/or the detected dirt distribution.

5. The method of claim 1, further comprising before the cleaning (360):
checking whether a door and/or a window of the vehicle is closed (320); and if the door and/or the window is not closed,
sending a notification to a user and waiting the door and/or the window to be closed (340); or
controlling the door and/or the window to be closed, wherein the checking is based on the 3D shape data.

6. The method of claim **1,** wherein the cleaning further comprises a pre-washing process before the washing process (710), wherein the pre-washing process comprises:
detecting an object on the vehicle that need to be removed before the washing process;
flying according to a second path; and
removing the object using a pre-washing module while flying according to the second path.

7. The method of claim **1,** wherein the cleaning further comprises a drying process after the washing process (730), wherein the drying process comprises:
flying according to a third path; and
drying the vehicle using at least one rotor of the at least one unmanned aerial vehicle while flying according to the third path.

8. The method of claim **1,** further comprising after the cleaning (420):
sending a report to a user to indicate completion of the cleaning (440), wherein the report includes:
one or more pictures/videos that captured after the cleaning; or
one or more pictures/videos that captured before and after the cleaning.

9. The method of claim **1,** further comprising sending status of the at least one unmanned aerial vehicle and/or a progress of providing the cleaning service to a user.

10. The method of claim **1,** further comprising receiving a command from a user and starting to provide the cleaning service after receiving the command.

11. The method of one of claims 1 to 10, the method further comprising: a control device receiving a reservation for the service from a user;
if the reservation is confirmed, the control device assigning at least one unmanned aerial vehicle to provide the service; and
the at least one unmanned aerial vehicle cleaning the vehicle.

12. The method of one of claims 1 to 10, further comprising:
receiving a reservation for a cleaning service from the vehicle or another (610); confirming the reservation (620); and
starting to clean the vehicle when a pre-set condition is satisfied (660).

13. An unmanned aerial vehicle for providing a cleaning service for a vehicle, **characterized by** comprising:
a main body;
an aircraft module configured to fly according to a first path (810,910);
a washing module, attached to the main body removably, configured to wash the vehicle while flying according to the first path (820,920); and
a calculating module configured to calculate the first path based on 3D shape data of the vehicle,
**characterized by** comprising an identifying module (950) configured to identify the vehicle so that before the cleaning (360) arriving at a vicinity of the target vehicle based on the positioning of the unmanned aerial vehicle itself and the vehicle and identifying the target vehicle, wherein the identifying is based on the 3D shape data (310).

14. The unmanned aerial vehicle of claim 13, further comprising at least one of:
a checking and notifying module (940) configured to check whether a door and/or a window of the vehicle is closed based on the 3D shape data and send a notification to a user if the door and/or the window is not closed;
a pre-washing module (960), attached to the main body removably, configured to remove an object on the vehicle that need to be removed before washing while the aircraft module flying according to a second path;
a rotor (970) configured to dry the vehicle while the aircraft module flying according to a third path;
a waxing module (980), attached to the main body removably, configured to wax the vehicle while the aircraft module flying according to a fourth path; and
a reporting module (990) configured to send a report to the user to indicate completion of the service.

15. The unmanned aerial vehicle of claim 13, further comprising a distance sensor configured to sense the distance between the vehicle and the unmanned aerial vehicle.

16. The unmanned aerial vehicle of claim 13, further comprising two or more distance sensors attached onto the bottom of the unmanned aerial vehicle with pre-determined distanced therebetween, wherein the two or more distance sensors are configured to enable the unmanned aerial vehicle to keep a specific attitude by sensing the distance between each of the sensors and the vehicle.

17. A system for providing a cleaning service for a vehicle comprising: a control device configured to:
receive a reservation for the service from a user; and
if the reservation is confirmed, assign at least one unmanned aerial vehicle to provide the service, and
the at least one unmanned aerial vehicle configured to: fly according to a first path; and
wash the vehicle using a washing module while flying according to the first path, wherein the first path is based on the 3D shape data of the vehicle, wherein the first path is further calculated by the at least one unmanned aerial vehicle based on the 3D shape data, wherein the 3D shape data are sent by the control device to the at least one unmanned aerial vehicle; or
is further received by the at least one unmanned aerial vehicle from the control device, wherein the control device calculates the first path based on the 3D shape data and sends the first path to the at least one unmanned aerial vehicle, **characterised in that** it further comprises an identifying module (950) configured to identify the vehicle and **in that** before the cleaning (360) arriving at a vicinity of the target vehicle based on the positioning of the unmanned aerial vehicle itself and the vehicle and identifying the target vehicle, wherein the identifying is based on the 3D shape data (310).

18. A non-transitory computer readable medium having instructions stored thereon that, when executed by one or more processors, causing the one or more processors to perform the method of any one of claims 1-12.

## Patentansprüche

1. Verfahren, das durch wenigstens ein unbemanntes Luftfahrzeug implementiert wird, zum Bereitstellen eines Reinigungsdienstes für ein Fahrzeug, **dadurch gekennzeichnet, dass** es umfasst:
das Fahrzeug zu reinigen (250, 360, 420, 540, 660), wobei das Reinigen einen Waschprozess umfasst, der umfasst:
gemäß einer ersten Bahn zu fliegen (110); und
das Fahrzeugs mithilfe eines Waschmoduls während des Fliegens gemäß der ersten Bahn zu waschen (120),
wobei die erste Bahn auf 3D-Formdaten des Fahrzeugs basiert, wobei die erste Bahn:
ferner basierend auf den 3D-Formdaten berechnet wird; oder
ferner von einer Vorrichtung empfangen wird, wobei die Vorrichtung die erste Bahn basierend auf den 3D-Formdaten berechnet,
**dadurch gekennzeichnet, dass** es ferner umfasst, vor dem Reinigen (360) in eine Nähe des Zielfahrzeugs zu gelangen, basierend auf der Positionierung des unbemannten Luftfahrzeugs selbst und des Fahrzeugs, und das Zielfahrzeug zu identifizieren, wobei das Identifizieren auf den 3D-Formdaten basiert (310).

2. Verfahren nach Anspruch 1, das ferner vor dem Reinigen (250) umfasst:
in einem Abteil des betreffenden oder eines anderen Fahrzeugs zu parken (210); und
aus dem Abteil herauszufliegen, wenn eine voreingestellte Bedingung erfüllt ist (240).

3. Verfahren nach Anspruch 1, wobei die Positionierung basierend auf der LoRa- und/oder der WiFi-Positionierungstechnologie erfolgt.

4. Verfahren nach Anspruch 1, das ferner vor dem Reinigen umfasst:
einen Verschmutzungsgrad und/oder eine Schmutzverteilung des Fahrzeugs zu erkennen und ein Schema für das Reinigen gemäß dem Verschmutzungsgrad und/oder der erkannten Schmutzverteilung zu bestimmen.

5. Verfahren nach Anspruch 1, das ferner vor dem Reinigen (360) umfasst:
zu prüfen, ob eine Tür und/oder ein Fenster des Fahrzeugs geschlossen ist/sind (320); und, wenn die Tür und/oder das Fenster nicht geschlossen ist/sind,
eine Benachrichtigung an einen Benutzer zu senden und zu warten, bis Tür und/oder Fenster geschlossen werden (340); oder
zu kontrollieren, ob die Tür und/oder das Fenster geschlossen ist/sind, wobei das Prüfen auf den 3D-Formdaten basiert.

6. Verfahren nach Anspruch 1, wobei das Reinigen ferner einen Vorwaschprozess vor dem Waschprozess (710) umfasst, wobei der Vorwaschprozess umfasst:
ein Objekt am Fahrzeug zu erkennen, das vor dem Waschvorgang entfernt werden muss;
gemäß einer zweiten Bahn zu fliegen; und
das Objekt mithilfe eines Vorwaschmoduls während des Fliegens gemäß der zweiten Bahn zu entfernen.

7. Verfahren nach Anspruch 1, wobei das Reinigen ferner einen Trocknungsprozess nach dem Waschprozess (730) umfasst, wobei der Trocknungsprozess umfasst:
gemäß einer dritten Bahn zu fliegen; und
das Fahrzeug mithilfe wenigstens eines Rotors des wenigstens einen unbemannten Luftfahrzeugs während des Fliegens gemäß der dritten Bahn zu trocknen.

8. Verfahren nach Anspruch 1, das ferner nach dem Reinigen (420) umfasst:
einen Bericht an einen Benutzer zu senden, um den Abschluss der Reinigung (440) anzuzeigen, wobei der Bericht beinhaltet:
ein oder mehrere Bilder/Videos, die nach dem Reinigen aufgenommen wurden; oder
ein oder mehrere Bilder/Videos, die vor und nach dem Reinigen aufgenommen wurden.

9. Verfahren nach Anspruch 1, das ferner umfasst, den Status des wenigstens einen unbemannten Luftfahrzeugs und/oder einen Fortschritt des Bereitstellens des Reinigungsdienstes an einen Benutzer zu senden.

10. Verfahren nach Anspruch 1, das ferner umfasst, einen Befehl von einem Benutzer zu empfangen und mit dem Bereitstellen des Reinigungsdienstes zu beginnen, nachdem der Befehl empfangen wurde.

11. Verfahren nach einem der Ansprüche 1 bis 10, wobei das Verfahren ferner umfasst: eine Steuervorrichtung empfängt eine Reservierung für den Dienst von einem Benutzer;
wobei, wenn die Reservierung bestätigt wird, die Steuereinrichtung wenigstens ein unbemanntes Luftfahrzeug zuweist, um den Dienst bereitzustellen; und das wenigstens eine unbemannte Luftfahrzeug das Fahrzeug reinigt.

12. Verfahren nach einem der Ansprüche 1 bis 10, das ferner umfasst:
eine Reservierung für einen Reinigungsdienst von dem betreffenden oder einem anderen Fahrzeug zu empfangen (610); die Reservierung zu bestätigen (620); und
mit dem Reinigen des Fahrzeugs zu beginnen, wenn eine voreingestellte Bedingung erfüllt ist (660).

13. Unbemanntes Luftfahrzeug zum Bereitstellen eines Reinigungsdienstes für ein Fahrzeug,
**dadurch gekennzeichnet, dass** es umfasst:
einen Hauptkörper;
ein Luftfahrzeugmodul, das dafür ausgelegt ist, gemäß einer ersten Bahn zu fliegen (810, 910);
ein Waschmodul, das abnehmbar am Hauptkörper angebracht und dafür ausgelegt ist, das Fahrzeug während des Fliegens gemäß der ersten Bahn zu waschen (820, 920); und
ein Berechnungsmodul, das dafür ausgelegt ist, die erste Bahn basierend auf 3D-Formdaten des Fahrzeugs zu berechnen,
**dadurch gekennzeichnet, dass** es ein Identifizierungsmodul (950) umfasst, das dafür ausgelegt ist, das Fahrzeug zu identifizieren, sodass es vor dem Reinigen (360) in eine Nähe des Zielfahrzeugs gelangt, basierend auf der Positionierung des unbemannten Luftfahrzeugs selbst und des Fahrzeugs, und das Zielfahrzeug identifiziert, wobei das Identifizieren auf den 3D-Formdaten basiert (310).

14. Unbemanntes Luftfahrzeug nach Anspruch 13, das ferner wenigstens eines der folgenden umfasst:
ein Prüf- und Benachrichtigungsmodul (940), das dafür ausgelegt ist zu prüfen, ob eine Tür und/oder ein Fenster des Fahrzeugs geschlossen ist/sind, basierend auf den 3D-Formdaten, und eine Benachrichtigung an einen Benutzer zu senden, wenn die Tür und/oder das Fenster nicht geschlossen ist/sind;
ein Vorwaschmodul (960), das abnehmbar am Hauptkörper angebracht und dafür ausgelegt ist, ein Objekt auf dem Fahrzeug zu entfernen, das vor dem Waschen entfernt werden muss, während das Luftfahrzeugmodul gemäß einer zweiten Bahn fliegt;
einen Rotor (970), der dafür ausgelegt ist, das Fahrzeug zu trocknen, während das Luftfahrzeugmodul gemäß einer dritten Bahn fliegt;
ein Wachsmodul (980), das abnehmbar am Hauptkörper angebracht und dafür ausgelegt ist, das Fahrzeug zu wachsen, während das Luftfahrzeugmodul gemäß einer vierten Bahn fliegt; und
ein Berichtmodul (990), das dafür ausgelegt ist, einen Bericht an den Benutzer zu senden, um den Abschluss des Dienstes anzuzeigen.

15. Unbemanntes Luftfahrzeug nach Anspruch 13, das ferner einen Abstandssensor umfasst, der dafür ausgelegt ist, den Abstand zwischen dem Fahrzeug und dem unbemannten Luftfahrzeug zu erfassen.

16. Unbemanntes Luftfahrzeug nach Anspruch 13, das ferner zwei oder mehr Abstandssensoren umfasst, die an der Unterseite des unbemannten Luftfahrzeugs mit einem vorbestimmten Abstand dazwischen angebracht sind, wobei die zwei oder mehr Abstandssensoren dafür ausgelegt sind, das unbemannte Luftfahrzeug in die Lage zu versetzen, eine bestimmte Fluglage zu halten, indem der Abstand zwischen jedem der Sensoren und dem Fahrzeug erfasst wird.

17. System zum Bereitstellen eines Reinigungsdienstes für ein Fahrzeug, das umfasst: eine Steuervorrichtung, die dafür ausgelegt ist:
eine Reservierung für den Dienst von einem Benutzer zu empfangen; und
wenn die Reservierung bestätigt wird, wenigstens ein unbemanntes Luftfahrzeug zuzuweisen, um den Dienst bereitzustellen; und
wobei das wenigstens eine unbemannte Luftfahrzeug dafür ausgelegt ist: gemäß einer ersten Bahn zu fliegen; und
das Fahrzeug mithilfe eines Waschmoduls während des Fliegens gemäß der ersten Bahn zu waschen, wobei die erste Bahn auf den 3D-Formdaten des Fahrzeugs basiert, wobei die erste Bahn ferner durch das wenigsten eine unbemannte Luftfahrzeug basierend auf den 3D-Formdaten berechnet wird, wobei die 3D-Formdaten durch die Steuervorrichtung an das wenigstens eine unbemannte Luftfahrzeug gesendet werden; oder
ferner durch das wenigstens eine unbemannte Luftfahrzeug von der Steuervorrichtung empfangen werden, wobei die Steuervorrichtung die erste Bahn basierend auf den 3D-Formdaten berechnet und die erste Bahn an das wenigstens eine unbemannte Luftfahrzeug sendet, **dadurch gekennzeichnet, dass** sie ferner ein Identifizierungsmodul (950) umfasst, das dafür ausgelegt ist, das Fahrzeug zu identifizieren, und dass sie vor dem Reinigen (360) in die Nähe des Zielfahrzeugs gelangt basierend
auf der Positionierung des unbemannten Luftfahrzeugs selbst und des Fahrzeugs und der Identifizierung des Zielfahrzeugs, wobei die Identifizierung auf den 3D-Formdaten (310) basiert.

18. Nicht-transitorisches computerlesbares Medium mit darauf gespeicherten Anweisungen, die, wenn sie durch einen oder mehrere Prozessoren ausgeführt werden, die ein oder mehreren Prozessoren veranlassen, das Verfahren nach einem der Ansprüche 1-12 durchzuführen.

## Revendications

1. Procédé mis en œuvre par au moins un véhicule aérien sans équipage pour assurer un service de nettoyage d'un véhicule, **caractérisé en ce qu'**il comporte les étapes consistant à :
nettoyer le véhicule (250, 360, 420, 540, 660), le nettoyage comportant un processus de lavage comportant :
un vol suivant un premier parcours (110) ; et
le lavage du véhicule à l'aide d'un module de lavage pendant le vol suivant le premier parcours (120),
le premier parcours étant basé sur des données de forme 3D du véhicule, le premier parcours :
étant en outre calculé d'après les données de forme 3D ; ou
étant en outre reçu en provenance d'un dispositif, le dispositif calculant le premier parcours d'après les données de forme 3D,
**caractérisé en ce qu'**il comporte en outre, avant le nettoyage (360), l'arrivée dans un voisinage du véhicule cible sur la base d'un positionnement du véhicule aérien sans équipage lui-même et du véhicule et l'identification du véhicule cible, l'identification étant basée sur les données de forme 3D (310).

2. Procédé selon la revendication 1, comportant en outre, avant le nettoyage (250) :
le fait de reposer dans un compartiment du véhicule ou d'un autre (210) ; et
la sortie en vol du compartiment lorsqu'une condition prédéfinie est satisfaite (240).

3. Procédé selon la revendication 1, le positionnement étant effectué sur la base d'une technologie de positionnement LoRa et/ou Wi-Fi.

4. Procédé selon la revendication 1, comportant en outre, avant le nettoyage :
la détection d'un niveau de saleté et/ou d'une répartition de salissures du véhicule et la détermination d'un schéma pour le nettoyage selon le niveau de saleté et/ou la répartition de salissures détectée.

5. Procédé selon la revendication 1, comportant en outre, avant le nettoyage (360) :
le fait de vérifier si une porte et/ou une fenêtre du véhicule est fermée (320) ; et si la porte et/ou la fenêtre n'est pas fermée,
l'envoi d'une notification à un utilisateur et le fait d'attendre que la porte et/ou la fenêtre soit fermée (340) ; ou
le fait de commander la fermeture de la porte et/ou de la fenêtre, la vérification étant basée sur les données de forme 3D.

6. Procédé selon la revendication 1, le nettoyage comportant en outre un processus de prélavage avant le processus de lavage (710), le processus de prélavage comportant :
la détection d'un objet sur le véhicule qu'il est nécessaire d'enlever avant le processus de lavage ;
un vol suivant un deuxième parcours ; et
l'enlèvement de l'objet à l'aide d'un module de prélavage pendant le vol suivant le deuxième parcours.

7. Procédé selon la revendication 1, le nettoyage comportant en outre un processus de séchage après le processus de lavage (730), le processus de séchage comportant :
un vol suivant un troisième parcours ; et
le séchage du véhicule à l'aide d'au moins un rotor du ou des véhicules aériens sans équipage pendant le vol suivant le troisième parcours.

8. Procédé selon la revendication 1, comportant en outre, après le nettoyage (420) :
l'envoi d'un compte rendu à un utilisateur pour indiquer l'achèvement du nettoyage (440), le compte rendu comprenant :
une ou plusieurs images/vidéos capturées après le nettoyage ; ou
une ou plusieurs images/vidéos capturées avant et après le nettoyage.

9. Procédé selon la revendication 1, comportant en outre l'envoi d'un état du ou des véhicules aériens sans équipage et/ou d'un avancement de la prestation du service de nettoyage à un utilisateur.

10. Procédé selon la revendication 1, comportant en outre la réception d'une consigne provenant d'un utilisateur et le fait de commencer à assurer le service de nettoyage après avoir reçu la consigne.

11. Procédé selon une des revendications 1 à 10, le procédé comportant en outre les étapes suivantes : un dispositif de commande reçoit une réservation pour le service provenant d'un utilisateur ;
si la réservation est confirmée, le dispositif de commande affecte au moins un véhicule aérien sans équipage pour assurer le service ; et
le ou les véhicules aériens sans équipage nettoient le véhicule.

12. Procédé selon une des revendications 1 à 10, comportant en outre :
la réception d'une réservation pour un service de nettoyage en provenance du véhicule ou d'un autre (610) ;
la confirmation de la réservation (620) ; et
le fait de commencer à nettoyer le véhicule lorsqu'une condition prédéfinie est satisfaite (660).

13. Véhicule aérien sans équipage destiné à assurer un service de nettoyage d'un véhicule,
**caractérisé en ce qu'**il comporte :
un corps principal ;
un module d'aéronef configuré pour voler suivant un premier parcours (810, 910) ;
un module de lavage, fixé de manière amovible au corps principal, configuré pour laver le véhicule pendant le vol suivant le premier parcours (820, 920) ; et
un module de calcul configuré pour calculer le premier parcours d'après des données de forme 3D du véhicule,
**caractérisé en ce qu'**il comporte un module (950) d'identification configuré pour identifier le véhicule de manière, avant le nettoyage (360), à arriver dans un voisinage du véhicule cible sur la base du positionnement du véhicule aérien sans équipage lui-même et du véhicule et à identifier le véhicule cible, l'identification étant basée sur les données de forme 3D (310).

14. Véhicule aérien sans équipage selon la revendication 13, comportant en outre au moins un module parmi :
un module (940) de vérification et de notification configuré pour vérifier si une porte et/ou une fenêtre du véhicule est fermée d'après les données de forme 3D et envoyer une notification à un utilisateur si la porte et/ou la fenêtre n'est pas fermée ;
un module (960) de prélavage, fixé au corps principal de manière amovible, configuré pour enlever un objet présent sur le véhicule qu'il est nécessaire d'enlever avant le lavage, tandis que le module d'aéronef vole suivant un deuxième parcours ;
un rotor (970) configuré pour sécher le véhicule tandis que le module d'aéronef vole suivant un troisième parcours ;
un module (980) de cirage, fixé au corps principal de manière amovible, configuré pour cirer le véhicule tandis que le module d'aéronef vole suivant un quatrième parcours ; et
un module (990) de compte rendu configuré pour envoyer un compte rendu à l'utilisateur pour indiquer l'achèvement du service.

15. Véhicule aérien sans équipage selon la revendication 13, comportant en outre un capteur de distance configuré pour détecter la distance entre le véhicule et le véhicule aérien sans équipage.

16. Véhicule aérien sans équipage selon la revendication 13, comportant en outre au moins deux capteurs de distance fixés sur le dessous du véhicule aérien sans équipage avec une distance prédéterminée entre eux, lesdits au moins deux capteurs de distance étant configurés pour permettre au véhicule aérien sans équipage de maintenir une attitude spécifique en détectant la distance entre chacun des capteurs et le véhicule.

17. Système destiné à assurer un service de nettoyage d'un véhicule, comportant : un dispositif de commande configuré pour :
recevoir une réservation pour le service provenant d'un utilisateur ; et
si la réservation est confirmée, affecter au moins un véhicule aérien sans équipage pour assurer le service, et
le ou les véhicules aériens sans équipage configurés pour : voler suivant un premier parcours ; et
laver le véhicule à l'aide d'un module de lavage pendant le vol suivant le premier parcours, le premier parcours étant basé sur les données de forme 3D du véhicule, le premier parcours étant en outre calculé par le ou les véhicules aériens sans équipage d'après les données de forme 3D, les données de forme 3D étant envoyées par le dispositif de commande au(x) véhicule(s) aérien(s) sans équipage ; ou
étant en outre reçu par le ou les véhicules aériens sans équipage en provenance du dispositif de commande, le dispositif de commande calculant le premier parcours d'après les données de forme 3D et envoyant le premier parcours au(x) véhicule(s) aérien(s) sans équipage, **caractérisé en ce qu'**il comporte en outre un module (950) d'identification configuré pour identifier le véhicule et par l'arrivée, avant le nettoyage (360), dans un voisinage du véhicule cible sur la base
du positionnement du véhicule aérien sans équipage lui-même et du véhicule et l'identification du véhicule cible, l'identification étant basée sur les données de forme 3D (310).

18. Support non transitoire lisible par ordinateur sur lequel sont stockées des instructions qui, lorsqu'elles sont exécutées par un ou plusieurs processeurs, amènent le ou les processeurs à réaliser le procédé selon l'une quelconque des revendications 1 à 12.
